# EUROPEAN PATENT APPLICATION

(11) **EP 4 141 338 A1**
(43) Date of publication of application: **01.03.2023**
(21) Application number: 21808526.4
(22) Date of filing: 08.05.2021
(51) Int. Cl.: F24F 5/00, F25B 41/00

(54) **COOLING SYSTEM AND COOLING METHOD THEREFOR**

(30) Priority: 18.05.2020 CN 202010421234
(71) Applicant: Huawei Digital Power Technologies Co., Ltd., Shenzhen, Guangdong 518043 (CN)
(72) Inventor: LIU, Gangfeng, Shenzhen, Guangdong 518129 (CN); LIU, Peiguo, Shenzhen, Guangdong 518129 (CN); ZHANG, Xiaofei, Shenzhen, Guangdong 518129 (CN)
(74) Representative: Gill Jennings & Every LLP
(86) International application number: PCT/CN2021/092400
(87) International publication number: WO 2021/233144

(57) **Abstract**

A cooling system and a cooling method thereof are provided. The cooling system includes a first refrigeration device (301), a second refrigeration device (302), and a cold storage device (303). Both of the first refrigeration device (301) and the cold storage device (303) are configured to provide a first medium for an end device to supply cold to the end device, and the second refrigeration device (302) is configured to provide a first medium for the cold storage device (303) to perform cold charging on the cold storage device (303). A cooling side medium input port (3012) of the second refrigeration device (302) is configured to receive a first medium output by the end device. A chilled side medium input port (3012) of the first refrigeration device (301) is connected to a cooling side medium output port (3021) of the second refrigeration device (302), and is configured to receive the first medium output from the cooling side medium output port (3021) of the second refrigeration device (302).

## Description

This application claims priority to Chinese Patent Application No. 202010421234.9, filed with the China National Intellectual Property Administration on May 18, 2020, and entitled "COOLING SYSTEM AND COOLING METHOD THEREOF", which is incorporated herein by reference in its entirety.

### TECHNICAL FIELD

This application relates to the field of cooling technologies, and in particular, to a cooling system and a cooling method thereof.

### BACKGROUND

To resolve a heat dissipation problem of a space, for example, a heat dissipation problem of a large equipment room, it is usually necessary to deploy air-conditioning devices, which include an end device and a water chiller. The water chiller supplies cold to the end device, so that the end device supplies cold air to an equipment room or another space, to reduce a space temperature. In some special cases, such as a case of a sudden power failure of the water chiller, a temporary power generation device, for example, a diesel generator, is needed to supply power to the water chiller, to ensure that the water chiller can continue to supply cold to the end device normally. However, it takes some time to start the diesel generator and restart the water chiller under power supply of the diesel generator. In this time period, heat generated in the equipment room or another space cannot be dissipated in time. To resolve this problem, a cold storage device may be deployed to supply cold to an end air-conditioning device during a time period from startup of the diesel generator to restart of the water chiller under the power supply of the diesel generator.

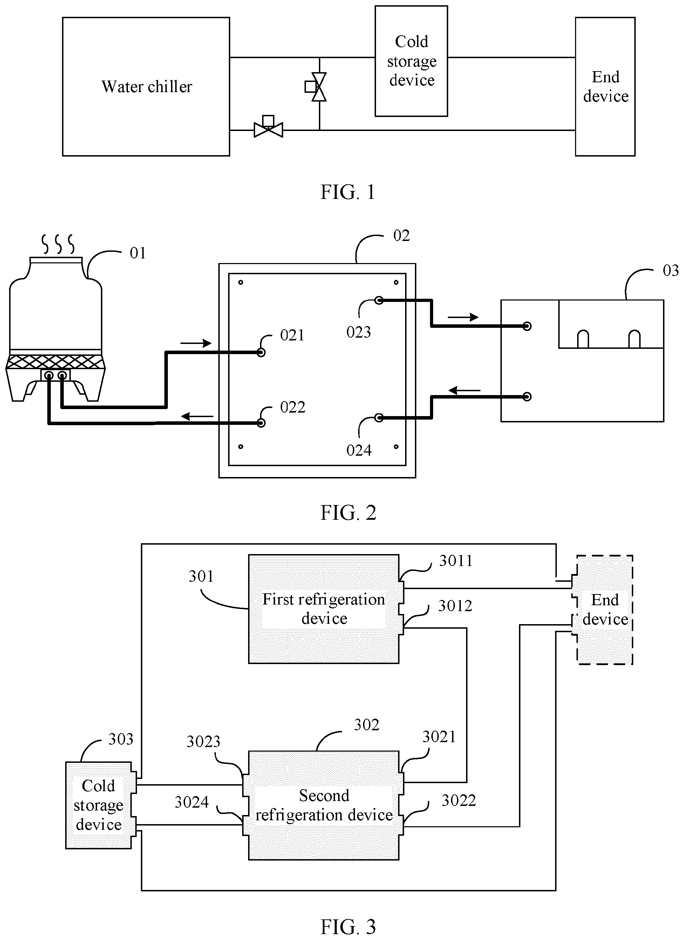

Currently, the end device, the water chiller, and the cold storage device may be deployed in a manner in which the water chiller and the cold storage device are sequentially connected in series to the end device by using pipelines. For details, refer to FIG. 1. FIG. 1 is a schematic diagram of a cooling architecture according to this application. As shown in FIG. 1, the cold storage device is deployed on a pipeline through which the water chiller provides a cooling medium for the end device. When the water chiller operates normally, the cooling medium output by the water chiller may flow to the end device via the cold storage device, to perform cold charging on the cold storage device and provide a cooling capacity for the end device. On the one hand, in the above manner, in a process in which cold charging is performed on the cold storage device, some media of a higher temperature flow to the end device, which affects cooling stability of the end device. On the other hand, because a temperature of the cooling medium needed by the end device is fixed, and the water chiller, the cold storage device, and the end device are connected in series, a temperature of the cooling medium output by the water chiller is determined based on the temperature of the cooling medium needed by the end device. In other words, the temperature of the cooling medium input from the water chiller to the cold storage device is fixed. Because a cold storage capacity of the cold storage device is mainly determined by a capacity of the cold storage device and a temperature of the cooling medium output to the cold storage device, the total cold storage capacity of the cold storage device is also fixed. This manner makes it difficult to adjust the cold storage capacity of the cold storage device.

### SUMMARY

This application provides a cooling system and a cooling method thereof, to ensure cooling stability of an end device, and make a cold storage capacity of a cold storage device more adjustable.

A first aspect of this application provides a cooling system. The cooling system may be configured to supply cold to an end device, for example, an air conditioner. The cooling system can ensure cooling stability of the end device, and implement flexible adjustment of a cold storage capacity of a cold storage device.

The cooling system at least includes a first refrigeration device, a second refrigeration device, and a cold storage device, and the different devices may be connected through pipelines. The first refrigeration device and the second refrigeration device each are a device having a cooling function for a first medium, where the first medium is a medium for the cooling system to supply cold to the end device and perform cold charging on the cold storage device in the cooling system. For example, the first medium may be water, or a mixture of water and ethylene glycol. Each of the first refrigeration device and the cold storage device may be configured to provide a first medium for the end device to supply cold to the end device, and the second refrigeration device may be configured to provide a first medium for the cold storage device to perform cold charging on the cold storage device.

The first refrigeration device includes a chilled side medium output port and a chilled side medium input port, and the second refrigeration device includes a cooling side medium output port, a cooling side medium input port, a chilled side medium input port, and a chilled side medium output port. The cooling side medium input port of the second refrigeration device is configured to receive a first medium output by the end device. The chilled side medium input port of the first refrigeration device is connected to the cooling side medium output port of the second refrigeration device through a pipeline, and is configured to receive the first medium output from the cooling side medium output port of the second refrigeration device. The chilled side medium output port of the first refrigeration device is configured to output, to the end device, the first medium used for cold supply. The chilled side medium output port of the second refrigeration device is configured to output, to the cold storage device, the first medium for cold charging, and the chilled side medium input port of the second refrigeration device is configured to receive a first medium output from the cold storage device.

In the cooling system, cold supply performed by the first refrigeration device on the end device and cold charging performed by the second refrigeration device on the cold storage device may be independent of each other, so that the cold charging performed by the second refrigeration device on the cold storage device does not affect the cold supply performed by the first refrigeration device on the end device. This ensures cooling stability of the end device, and implements flexible adjustment of the cold storage capacity of the cold storage device. In addition, the chilled side medium input port of the first refrigeration device is connected to the cooling side medium output port of the second refrigeration device. This implements reuse of the cooling side of the second refrigeration device and the chilled side of the first refrigeration device, and reduces deployment costs of the cooling side of the second refrigeration device.

With reference to the first aspect, in a possible implementation, a temperature of the first medium provided by the second refrigeration device for the cold storage device is lower than a temperature of the first medium provided by the first refrigeration device for the end device. Because the cold supply performed by the first refrigeration device on the end device and the cold charging performed by the second refrigeration device on the cold storage device are independent operations, a reduction of a temperature of cold charging by the second refrigeration device helps increase a cold storage capacity of the cooling system.

With reference to the first aspect, in another possible implementation, the cooling system may further include a water mixing device. When a temperature of the first medium output by the cold storage device when the cold storage device supplies cold to the end device is lower than the temperature of the first medium output from the chilled side medium output port of the first refrigeration device when the first refrigeration device supplies cold to the end device, the water mixing device is configured to receive the first medium output by the cold storage device and the first medium output by the end device for mixing, and transmit the mixed first media to the end device. The use of the water mixing device enables the cold storage capacity of the cold storage device to be adjusted more flexibly, and ensures cooling stability of the end device.

With reference to the first aspect, in another possible implementation, the cooling system includes a plurality of second refrigeration devices connected in parallel, and the plurality of second refrigeration devices serve as backups for each other to ensure reliability of the cooling system.

With reference to the first aspect, in another possible implementation, the second refrigeration devices each may be configured to perform cold charging on the cold storage device through a first medium convergence path. This prevents failure, of cold charging on the cold storage device, caused by a breakdown of a single second refrigeration device, and ensures reliability of cold charging on the cold storage device.

With reference to the first aspect, in another possible implementation, cooling side medium output ports of the plurality of second refrigeration devices are connected to the chilled side medium input port of the first refrigeration device through a second medium convergence path. One first refrigeration device cools cooling-side media of the plurality of second refrigeration devices, to improve use efficiency of the first refrigeration device.

With reference to the first aspect, in another possible implementation, the cooling system includes a plurality of cold storage devices connected in parallel, and the second refrigeration devices may be configured to perform cold charging on the plurality of cold storage devices through a first medium distribution path. This prevents failure, of cold storage in the system, caused by a breakdown of a single cold storage device, and ensures reliability of cold storage in the system.

With reference to the first aspect, in another possible implementation, the cooling system includes a plurality of first refrigeration devices connected in parallel, and the cooling side medium output ports of the second refrigeration devices are connected to chilled side medium input ports of the plurality of first refrigeration devices through a second medium distribution path. This prevents failure, of cooling of the cooling side medium of the second refrigeration device, caused by a breakdown of a single first refrigeration device, and ensures reliability of the cooling of the cooling side medium of the second refrigeration device.

With reference to the first aspect, in another possible implementation, the cold storage medium in the cold storage device may remain in the same phase after cold supply. In other words, a state of the cold storage medium in the cold storage device before the cold storage device supplies cold to the end device is the same as a state of the cold storage medium in the cold storage device after the cold storage device supplies cold to the end device.

With reference to the first aspect, in another possible implementation, the cold storage medium in the cold storage device may be a phase change medium. In other words, a state of the cold storage medium in the cold storage device before the cold storage device supplies cold to the end device is different from a state of the cold storage medium in the cold storage device after the cold storage device supplies cold to the end device. The use of the phase change medium as the cold storage medium can improve the cold storage capacity of the cold storage device.

A second aspect of this application provides a cooling method of a cooling system. The cooling method of the cooling system may be used to supply cold to an end device, for example, an air conditioner. The method can ensure cooling stability of the end device, and implement flexible adjustment of a cold storage capacity of a cold storage device.

The cooling system at least includes a first refrigeration device, a second refrigeration device, and a cold storage device, and the different devices may be connected through pipelines. The first refrigeration device and the second refrigeration device each are a device having a cooling function for a first medium, where the first medium is a medium for the cooling system to supply cold to the end device and perform cold charging on the cold storage device in the cooling system. For example, the first medium may be water, or a mixture of water and ethylene glycol. Each of the first refrigeration device and the cold storage device may be configured to provide a first medium for the end device to supply cold to the end device, and the second refrigeration device may be configured to provide a first medium for the cold storage device to perform cold charging on the cold storage device.

The first refrigeration device includes a chilled side medium output port and a chilled side medium input port, and the second refrigeration device includes a cooling side medium output port, a cooling side medium input port, a chilled side medium input port, and a chilled side medium output port. The cooling side medium input port of the second refrigeration device is configured to receive a first medium output by the end device. The chilled side medium input port of the first refrigeration device is connected to the cooling side medium output port of the second refrigeration device through a pipeline, and is configured to receive the first medium output from the cooling side medium output port of the second refrigeration device. The chilled side medium output port of the first refrigeration device is configured to output, to the end device, the first medium used for cold supply. The chilled side medium output port of the second refrigeration device is configured to output, to the cold storage device, the first medium for cold charging, and the chilled side medium input port of the second refrigeration device is configured to receive a first medium output from the cold storage device.

In the method, the first medium output by the end device can be transmitted to the cooling side input port of the second refrigeration device, and the first medium output from the cooling side medium output port of the second refrigeration device can be transmitted to the chilled side medium input port of the first refrigeration device.

Cold charging performed by the second refrigeration device on the cold storage device does not affect cold supply performed by the first refrigeration device on the end device. This ensures cooling stability of the end device, and implements flexible adjustment of the cold storage capacity of the cold storage device. In addition, in the method, the first medium output from the cooling side medium output port of the second refrigeration device is transmitted to the chilled side medium input port of the first refrigeration device. This implements reuse of the cooling side of the second refrigeration device and the chilled side of the first refrigeration device, and reduces deployment costs of the cooling side of the second refrigeration device.

With reference to the second aspect, in a possible implementation, a temperature of the first medium provided by the second refrigeration device for the cold storage device is lower than a temperature of the first medium provided by the first refrigeration device for the end device. Because the cold supply performed by the first refrigeration device on the end device and the cold charging performed by the second refrigeration device on the cold storage device are independent operations, a reduction of a temperature of cold charging by the second refrigeration device helps increase a cold storage capacity of the cooling system.

With reference to the second aspect, in another possible implementation, when the cold storage device supplies cold to the end device, if a temperature of the first medium output by the cold storage device when the cold storage device supplies cold to the end device is lower than the temperature of the first medium output from the chilled side medium output port of the first refrigeration device when the first refrigeration device supplies cold to the end device, the method further includes mixing the first medium output by the cold storage device and the first medium output by the end device, and transmitting the mixed first media to the end device. This enables the cold storage capacity of the cold storage device to be adjusted more flexibly, and ensures cooling stability of the end device.

With reference to the second aspect, in another possible implementation, the cooling system includes a plurality of second refrigeration devices connected in parallel, and the plurality of second refrigeration devices serve as backups for each other to ensure reliability of the cooling system.

With reference to the second aspect, in another possible implementation, the method may further include transmitting first media output by the plurality of second refrigeration devices to the cold storage device through a first medium convergence path. This prevents failure, of cold charging on the cold storage device, caused by a breakdown of a single second refrigeration device, and ensures reliability of cold charging on the cold storage device.

With reference to the second aspect, in another possible implementation, specifically, first media output from cooling side medium output ports of the plurality of second refrigeration devices may be transmitted to the chilled side medium input port of the first refrigeration device through a second medium convergence path. One first refrigeration device cools cooling-side media of the plurality of second refrigeration devices, to improve use efficiency of the first refrigeration device.

With reference to the second aspect, in another possible implementation, the cooling system includes a plurality of cold storage devices connected in parallel, and the method may further include transmitting the first media output by the second refrigeration devices to the plurality of cold storage devices through a first medium distribution path. This prevents failure, of cold storage in the system, caused by a breakdown of a single cold storage device, and ensures reliability of cold storage in the system.

With reference to the second aspect, in another possible implementation, the cooling system includes a plurality of first refrigeration devices connected in parallel, and the method specifically includes transmitting, to chilled side medium input ports of a plurality of first refrigeration devices through a second medium distribution path, the first media output from the cooling side medium output ports of the second refrigeration devices. This prevents failure, of cooling of the cooling side medium of the second refrigeration device, caused by a breakdown of a single first refrigeration device, and ensures reliability of the cooling of the cooling side medium of the second refrigeration device.

With reference to the second aspect, in another possible implementation, the cold storage medium in the cold storage device may be in the same phase after cold supply. In other words, a state of the cold storage medium in the cold storage device before the cold storage device supplies cold to the end device is the same as a state of the cold storage medium in the cold storage device after the cold storage device supplies cold to the end device.

With reference to the second aspect, in another possible implementation, the cold storage medium in the cold storage device may be a phase change medium. In other words, a state of the cold storage medium in the cold storage device before the cold storage device supplies cold to the end device is different from a state of the cold storage medium in the cold storage device after the cold storage device supplies cold to the end device. The use of the phase change medium as the cold storage medium can improve the cold storage capacity of the cold storage device.

### BRIEF DESCRIPTION OF DRAWINGS

FIG. 1 is a schematic diagram of a cooling architecture according to this application;
FIG. 2 is a schematic diagram of a deployment scenario of a water-cooled refrigeration device according to an embodiment of this application;
FIG. 3 is a schematic diagram of an architecture of a cooling system according to an embodiment of this application;
FIG. 4 is a schematic diagram of an architecture of another cooling system according to an embodiment of this application;
FIG. 5 is a schematic diagram of an architecture of another cooling system according to an embodiment of this application;
FIG. 6 is a schematic diagram of an architecture of another cooling system according to an embodiment of this application;
FIG. 7 is a schematic diagram of an architecture of still another cooling system according to an embodiment of this application;
FIG. 8 is a schematic diagram of system operation of the cooling system shown in FIG. 7 in mode 1 according to an embodiment of this application;
FIG. 9 is a schematic diagram of system operation of the cooling system shown in FIG. 7 in mode 2 according to an embodiment of this application;
FIG. 10 is a schematic diagram of system operation of the cooling system shown in FIG. 7 in mode 3 according to an embodiment of this application; and
FIG. 11 is a schematic flowchart of a cooling method of a cooling system according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Before introducing a cooling system and a cooling method thereof provided by embodiments of this application, operating principles of refrigeration devices in embodiments of this application are first introduced.

The refrigeration devices in embodiments of this application may include a water-cooled refrigeration device and an air-cooled refrigeration device, for example, a water-cooled water chiller and an air-cooled water chiller. Reference may be made to FIG. 2 for the water-cooled refrigeration device. FIG. 2 is a schematic diagram of a deployment scenario of a water-cooled refrigeration device according to an embodiment of this application. As shown in FIG. 2, the deployment scenario may include a tower cooling device 01, a water-cooled refrigeration device 02, and an end device 03.

The water-cooled refrigeration device 02 includes four transmission ports: a transmission port 021, a transmission port 022, a transmission port 023, and a transmission port 024. These four transmission ports may be classified into chilled side transmission ports and cooling side transmission ports, where the chilled side transmission ports include the transmission port 023 and the transmission port 024, and the cooling side transmission ports include the transmission port 021 and the transmission port 022. The chilled side transmission port is configured to input or output a chilled side medium of the water-cooled refrigeration device 02. The chilled side medium is an object to be cooled by the water-cooled refrigeration device 02 during refrigeration, and is also a medium used by the water-cooled refrigeration device 02 to supply cold to and perform cold charging on another device. The cooling side transmission port is configured to input or output a cooling side medium of the water-cooled refrigeration device 02. The cooling side medium is a medium used by the water-cooled refrigeration device 02 to carry heat of the chilled-side medium out of the water-cooled refrigeration device 02, where the heat is generated when the water-cooled refrigeration device 02 exchanges heat with the chilled side medium during cooling of the chilled-side medium. It should be understood that the chilled side medium may indirectly exchange heat with the cooling side medium through a refrigerant.

The transmission port 023 is a chilled side output port of the water-cooled refrigeration device 02, and is configured to output a chilled side medium of a temperature 1 to the end device 03 and supply a cooling capacity to the end device 03. The transmission port 024 is a chilled side input port of the water-cooled refrigeration device 02, and is configured to input, into the water-cooled refrigeration device 02, a chilled side medium of a temperature 2 (the temperature 2 is higher than the temperature 1) transmitted by the end device 03.

The transmission port 021 is a cooling side input port of the water-cooled refrigeration device 02, and is configured to input, into the water-cooled refrigeration device 02, a cooling side medium of a temperature 3 transmitted by the tower cooling device 01, so that the water-cooled refrigeration device 02 cools, using the cooling side medium of the temperature 3, the cooling side medium of the temperature 2 input from the transmission port 024, to obtain the chilled side medium of the temperature 1 and a cooling side medium of a temperature 4 (the temperature 4 is higher than the temperature 3). The transmission port 022 is a cooling side output port of the water-cooled refrigeration device 02, and is configured to output the cooling side medium of the temperature 4 to the tower cooling device 01. The tower cooling device 01 is configured to cool the cooling side medium of the temperature 4 to obtain the cooling side medium of the temperature 3, and output the cooling side medium of the temperature 3 to the water-cooled refrigeration device 02.

It should be understood that, in the foregoing deployment scenario, at least one medium circulating power device (not shown in FIG. 2) may further be included to drive the medium to circulate between the devices through pipelines. For example, a cooling side water pump may be deployed on a pipeline between the transmission port 022 and the tower cooling device 01 to drive the cooling side medium to circulate between the tower cooling device 01 and the water-cooled refrigeration device 02. For another example, a chilled side water pump may be deployed on a pipeline between the transmission port 023 and the end device 03 for circulation of the chilled side medium between the water-cooled refrigeration device 02 and the end device 03.

Based on the foregoing deployment architecture, the water-cooled refrigeration device can cool, using the cooling-side medium, the higher-temperature chilled side medium returned by the end device, thereby implementing cold supply for the end device. The air-cooled refrigeration device is the same as the water-cooled refrigeration device in that the air-cooled refrigeration device also includes a chilled side transmission port, and is configured to input a chilled side medium of a higher temperature transmitted from the end device, or configured to output a chilled side medium of a lower temperature to the end device. The air-cooled refrigeration device is different from the water-cooled refrigeration device in that the air-cooled refrigeration device does not include a cooling side transmission port. To be specific, after a chilled side medium of a higher temperature is input into the air-cooled refrigeration device, the air-cooled refrigeration device cools the chilled side medium of a higher temperature with the air as a cooling medium through a fin condenser or another device, to obtain a lower-temperature chilled side medium for transmission to the end.

The cooling system provided by embodiments of this application is described below. The cooling system may supply cold to an end device, for example, an air conditioner. The cooling system can ensure cooling stability of the end device, and implement flexible adjustment of a cold storage capacity of a cold storage device.

FIG. 3 is a schematic diagram of an architecture of a cooling system according to an embodiment of this application. As shown in FIG. 3, the cooling system at least includes a first refrigeration device 301, a second refrigeration device 302, and a cold storage device 303. The different devices can be connected through pipelines, and the pipelines may be configured to transmit a first medium. The first medium is a medium for the cooling system to supply cold to an end device and perform cold charging on the cold storage device 303 in the cooling system. For example, the first medium may be water, or a mixture of water and ethylene glycol.

The first refrigeration device 301 and the second refrigeration device 302 are a device having a cooling function for the first medium. For example, the first refrigeration device 301 may be an air-cooled refrigeration device or a water-cooled refrigeration device, and the second refrigeration device 302 is a water-cooled refrigeration device. If the first refrigeration device 301 is a water-cooled refrigeration device, the cooling system further includes a tower cooling device (not shown in FIG. 3) corresponding to the first refrigeration device 301. Each of the first refrigeration device 301 and the cold storage device 303 may be configured to provide a first medium for the end device to supply cold to the end device, and the second refrigeration device 302 may be configured to provide a first medium for the cold storage device 303 to perform cold charging on the cold storage device.

The first refrigeration device 301 includes a chilled side medium output port 3011 and a chilled side medium input port 3012, and the second refrigeration device 302 includes a cooling side medium output port 3021, a cooling side medium input port 3022, a chilled side medium input port 3023, and a chilled side medium output port 3024. The cooling side medium input port 3022 of the second refrigeration device 302 is configured to receive a first medium output by the end device. The chilled side medium input port 3012 of the first refrigeration device 301 is connected to the cooling side medium output port 3021 of the second refrigeration device 302 through a pipeline, and is configured to receive the first medium output from the cooling side medium output port 3021 of the second refrigeration device. The chilled side medium output port 3011 of the first refrigeration device 301 is configured to output, to the end device 303, the first medium used for cold supply. The chilled side medium output port 3024 of the second refrigeration device 302 is configured to output, to the cold storage device, the first medium for cold charging, and the chilled side medium input port 3023 of the second refrigeration device 302 is configured to receive a first medium output from the cold storage device.

Here, a temperature of the first medium input or output from the transmission port of each of the different devices in the cooling system is introduced. Each of the first refrigeration device and the cold storage device provides a first medium of a first temperature for cold supply on the end device. The second refrigeration device provides a first medium of a second temperature for cold charging on the cold storage device. The second temperature is equal to or lower than the first temperature. The cooling side medium input port of the second refrigeration device receives a first medium of a third temperature output by the end device, and the first medium of the third temperature is used by the second refrigeration device to cool a first medium of a fourth temperature input from the chilled side medium input port of the second refrigeration device, to obtain the first medium of the second temperature for cold charging and a first medium of a fifth temperature output from the cooling side medium output port of the second refrigeration device. The fifth temperature is higher than the third temperature, and the second temperature is lower than the fourth temperature. The chilled side medium input port of the first refrigeration device receives the first medium of the fifth temperature output from the cooling side medium output port of the second refrigeration device. The first medium of the fifth temperature is used by the first refrigeration device for cooling, to obtain the first medium of the first temperature for cold supply, where the first temperature is lower than the fifth temperature.

It should be understood that the foregoing temperatures are not limited to fixed values, but may be values that meet a specific condition within a temperature range. For example, the second temperature (namely, a temperature of the first medium output from the chilled side medium output port of the second refrigeration device) and the fourth temperature (namely, a temperature of the first medium input from the chilled side medium input port of the second refrigeration device) meet that the second temperature is 7°C to 10°C lower than the fourth temperature. The third temperature (namely, a temperature of the first medium input from the cooling side medium input port of the second refrigeration device) and the fifth temperature (namely, a temperature of the first medium output from the cooling side medium output port of the second refrigeration device) meet that the fifth temperature is 3°C to 7°C higher than the third temperature. The fifth temperature (namely, a temperature of the first medium input from the chilled side medium input port of the first refrigeration device) and the first temperature (namely, a temperature of the first medium output from the chilled side medium output port of the first refrigeration device) meet that the fifth temperature is 7°C to 10°C lower than the first temperature. Specific temperature ranges may be set based on different application scenarios.

In an implementation, if the cooling system is configured to supply cold to an end device in equipment rooms such as a data center, the first temperature may be a temperature between 10°C and 20°C, and the third temperature may be a temperature between 17°C and 28°C. To flexibly adjust a cold storage capacity of the cold storage device, the second temperature may be any temperature lower than the first temperature and matching a cooling power of the second refrigeration device.

In another implementation, if the cooling system is configured to supply cold to end devices of an office, a residential building, and the like, the first temperature may be about 7°C, the third temperature may be about 12°C, and the second temperature may be any temperature lower than the first temperature and matching the cooling power of the second refrigeration device.

In a specific implementation, temperature values may be set for the first temperature in the first refrigeration device and the second temperature in the second refrigeration device based on the foregoing ranges. The first refrigeration device and the second refrigeration device detect a temperature of a first medium at respective chilled side medium output ports by using a temperature sensor (the second refrigeration device may also perform detection based on a temperature of a first medium input from the cooling side medium input port of the second refrigeration device), to adjust respective cooling power in real time, so that the temperature of the first medium output from the respective chilled side medium output ports matches the set temperature.

In this embodiment, the first refrigeration device is configured to supply cold to the end device, and the second refrigeration device is configured to perform cold charging on the cold storage device, and these two operations may be independent of each other, so that the cold charging performed by the second refrigeration device on the cold storage device does not affect the cold supply performed by the first refrigeration device on the end device. This ensures cooling stability of the end device, and implements flexible adjustment of the cold storage capacity of the cold storage device. In addition, the cooling side medium input port of the second refrigeration device receives a first medium output from the end device, and the first medium output from the end device is used to cool a cooling side medium of the second refrigeration device. In addition, the chilled side medium input port of the first refrigeration device is connected to the cooling side medium output port of the second refrigeration device, and is configured to input the first medium used for refrigeration of the second refrigeration device into the first refrigeration device for cooling. This implements reuse of the cooling side of the second refrigeration device and the chilled side of the first refrigeration device, and reduces deployment costs of the cooling side of the second refrigeration device.

Optionally, a temperature of a first medium provided by the second refrigeration device to the cold storage device during cold charging on the cold storage device may be the same as or low than a temperature of a first medium provided by the first refrigeration device to the cold storage device during cold supply on the end device. Temperatures of cold supply by the first refrigeration device and the second refrigeration device can be independently controlled, which makes the cold storage capacity of the cold storage device more adjustable.

Optionally, the cooling system may include a plurality of second refrigeration devices connected in parallel.

Optionally, the cooling system may include a plurality of cold storage devices connected in parallel.

Optionally, the cooling system may include a plurality of first refrigeration devices connected in parallel.

The plurality of devices of the same type connected in parallel serve as backups for each other, which ensures a cooling capacity of the cooling system and improves an emergency-resisting capability and reliability of the cooling system.

Optionally, the cooling system may further include at least one medium circulating power device, for example, a water pump device, to drive the first medium to circulate between the devices through pipelines. For example, a cooling side water pump may be deployed on a pipeline between the chilled side medium output port of the second refrigeration device and the cold storage device to drive the first medium to circulate between the second refrigeration device and the cold storage device. For another example, a cooling side water pump may be deployed on a pipeline between the cooling side medium input port of the second refrigeration device and the end device to drive the first medium to circulate between the end device, the second refrigeration device, and the first refrigeration device.

Optionally, the cooling system may further include at least one sensor device, for example, a temperature sensor, a pressure sensor, or a flow sensor, to collect a corresponding status parameter in the cooling system, and then adjust an operating status of the cooling system based on the status parameter, for example, adjust medium flows of different pipelines in the cooling system, adjust an operating frequency of a fan of the medium circulating power device, adjust an operating frequency of a fan of a tower cooling device in the first refrigeration device when the first refrigeration device is a water-cooled refrigeration device, or switch between different operation modes of the cooling system.

Optionally, the cooling system may further include a control device. The control device may be connected to one or more of the first refrigeration device, the second refrigeration device, the cold storage device, the medium circulating power device, a valve, or the sensor device, and is configured to control switching of three operation modes (the three operation modes will be introduced below) of the cooling system, schedule a cooling device for the end device, adjust the operating status of the cooling system based on the status parameter collected by the sensor device, or the like.

Optionally, the cold storage device includes a cold storage medium which can store a cooling capacity for cold charging of the second refrigeration device, and the cold storage device may be a cold storage tank, for example, a vertical cold storage tank or a horizontal cold storage tank. In an implementation, the cold storage medium in the cold storage device may be the first medium. During cold charging, the cold storage device stores in cold preservation the low-temperature first medium received from the second refrigeration device, to implement cold storage. During cold discharging, the cold storage device outputs the first medium stored in cold preservation to implement cold supply. In another implementation, the cool storage medium in the cold storage device may be another cold storage medium different from the first medium. During cold charging, the cold storage device has the low-temperature first medium received from the second refrigeration device exchange heat with the cold storage medium, to transfer the cooling capacity of the first medium to the cold storage medium, so that the cold storage medium after the transfer of the cooling capacity can be stored in cold preservation to implement cold storage. During cold discharging, the cold storage device has the cold storage medium stored in cold preservation exchange heat with the first medium, to transfer the cooling capacity of the cold storage medium to the first medium, and outputs the first medium after the transfer of the cooling capacity to implement cold supply.

It should be understood that the cold storage medium in the cold storage device may be a medium in the same phase after cold supply, or may be a medium that experiences a phase change after cold supply. In other words, a state of the cold storage medium before cold supply may be the same as or different from a state of the cold storage medium after cold supply. For example, after cold charging is completed for the cold storage device, the cold storage medium in the cold storage device is water of a lower temperature. After the cold storage device performs cold supply, the cold storage medium in the cold storage device is water of a higher temperature. In this case, a state of the cold storage medium in the cold storage device remains unchanged. For another example, after cold charging is completed for the cold storage device, the cold storage medium in the cold storage device is ice. After the cold storage device performs cold supply, the cold storage medium in the cold storage device is water. In this case, a state of the cold storage medium in the cold storage device has changed. In the case of storing the same cooling capacity, cold storage using ice as the cold storage medium requires a smaller volume than cold storage using water as the cold storage medium. Therefore, given the same volume of the cold storage device, cold storage using the phase change medium as the cold storage medium can improve the cold storage capacity of the cold storage device.

In a specific implementation, the first refrigeration device, the second refrigeration device, the cold storage device, and the end device may be connected or deployed in any one or more of the following alternative manners:

In the first alternative manner, when the system includes a plurality of second refrigeration devices connected in parallel, the plurality of second refrigeration devices may perform cold charging on the cold storage device through a first medium convergence path. In other words, the plurality of second refrigeration devices may be connected to the cold storage device through the first medium convergence path, and the first medium convergence path is used to converge first media output from chilled side medium output ports of the plurality of second refrigeration devices and then transmit the converged first media to the cold storage device. If the cooling system includes only one cold storage device, the first media converged through the first medium convergence path may be transmitted to the cold storage device. If the system includes a plurality of cold storage devices, the first media converged through the first medium convergence path may be distributed and the distributed split first media are transmitted to the cold storage devices. The first medium convergence path may be a medium path in a water collector device, or may be a path formed by a pipeline having a plurality of input ports. In this alternative manner, the second refrigeration devices are connected in parallel, and perform cold charging on the cold storage device through the first medium convergence path. This prevents failure, of cold charging on the cold storage device, caused by a breakdown of a single second refrigeration device, and ensures reliability of cold charging on the cold storage device.

In the second alternative manner, when the system includes a plurality of cold storage devices connected in parallel, the second refrigeration devices may separately perform cold charging on the plurality of cold storage devices through a first medium distribution path. In other words, the second refrigeration device may be connected to the plurality of cold storage devices through the first medium distribution path, and the first medium distribution path is used to distribute the first medium output from the chilled side medium output port of the second refrigeration device and then transmit the distributed first medium to each cold storage device. If the cooling system includes only one second refrigeration device, the first medium output from the chilled side medium output port of the second refrigeration device may be distributed and then transmitted to each cold storage device through the first medium distribution path. If the cooling system includes a plurality of second refrigeration devices, chilled-side media of the second refrigeration devices are converged, and are distributed and transmitted to the cold storage devices respectively through the first medium distribution path. The first medium distribution path may be a medium path in a water separator device, or may be a path formed by a pipeline having a plurality of output ports. In this alternative manner, the second refrigeration device performs cold charging, through the first medium distribution path, on the plurality of cold storage devices connected in parallel. This prevents failure, of cold storage in the system, caused by a breakdown of a single cold storage device, and ensures reliability of cold storage in the system.

It should be understood that, based on the first alternative manner and the second alternative manner, when the system includes a plurality of second refrigeration devices connected in parallel and a plurality of cold storage devices connected in parallel, in an implementation, a second refrigeration device module including the second refrigeration devices connected in parallel is connected in series to a cold storage device module including the cold storage devices connected in parallel. In other words, the first media output from the chilled side medium output ports of the second refrigeration devices may be transmitted to the first medium distribution path after passing through the first medium convergence path, and the first medium distribution path distributes the first media and transmits the distributed first media to the cold storage devices. The first medium convergence path and the first medium distribution path may be medium paths on a same device, or may be medium paths on different devices. For example, the first medium convergence path may be a medium path in a first water collector device, and the first medium distribution path may be a medium path in a first water separator device. Alternatively, the first medium convergence path and the first medium distribution path may be medium paths in an integrated water collector/separator device, and the integrated water collector/separator device can converge the first media output from the chilled side medium output ports of the second refrigeration devices, and distribute the first media to the cold storage devices.

Based on the first alternative manner and the second alternative manner, when the system includes a plurality of second refrigeration devices connected in parallel and includes a plurality of cold storage devices connected in parallel, in another implementation, the second refrigeration devices may have respective corresponding cold storage devices for cold supply, and the second refrigeration devices are connected to corresponding cold storage devices for cold supply. For example, when a quantity of second refrigeration devices is the same as a quantity of cold storage devices, the second refrigeration devices are connected to the cold storage devices in a one-to-one correspondence, to perform cold charging on the connected cold storage devices. For another example, when the quantity of second refrigeration devices is greater than the quantity of cold storage devices, a plurality of second refrigeration devices may be connected to a same cold storage device, to perform cold charging on the same cold storage device. For another example, when the quantity of cold storage devices is greater than the quantity of second refrigeration devices, a same second refrigeration device may be connected to each of a plurality of cold storage devices, to perform cold charging on each of the plurality of cold storage devices.

In the third alternative manner, the cooling system includes a plurality of second refrigeration devices, cooling side medium output ports of the plurality of second refrigeration devices may be connected to the chilled side medium input port of the first refrigeration device through a second medium convergence path. In other words, the second medium convergence path exists between the plurality of second refrigeration devices and the first refrigeration device, and the second medium convergence path is used to converge the first media output from the cooling side medium output ports of the second refrigeration devices, and then transmit the converged first media to the first refrigeration device. If the cooling system includes only one first refrigeration device, the first media converged through the second medium convergence path may be transmitted to the first refrigeration device. If the system includes a plurality of first refrigeration devices, the first media converged through the second medium convergence path may be distributed and then transmitted to the first refrigeration devices. In this alternative manner, the cooling side medium output ports of the plurality of second refrigeration devices are connected to the chilled side medium input ports of the first refrigeration device, that is, one first refrigeration device cools cooling-side media of the plurality of second refrigeration devices, to improve use efficiency of the first refrigeration device.

In the fourth alternative manner, when the cooling system includes a plurality of first refrigeration devices connected in parallel, the cooling side medium output port of the second refrigeration device may be connected to chilled side medium input ports of the plurality of first refrigeration devices through a second medium distribution path. In other words, the second medium distribution path exists between the cooling side medium output port of the second refrigeration device and the chilled side medium input port of the first refrigeration device, and the second medium distribution path is used to distribute the first medium output from the cooling side medium output port of the second refrigeration device, and then transmit the distributed first medium to the chilled side medium input port of each first refrigeration device. If the cooling system includes only one second refrigeration device, the first medium output from the cooling side medium output port of the second refrigeration device may be distributed through the second medium distribution path, and then the distributed first medium is transmitted to the chilled side medium input port of each first refrigeration device. If the cooling system includes a plurality of second refrigeration devices, first media output from cooling side medium output ports of the second refrigeration devices may be converged, and the converged first media are distributed through the second medium distribution path and then transmitted to the chilled side medium input port of each first refrigeration device. The cooling side medium output port of the second refrigeration device is connected to the chilled side medium input ports of the plurality of first refrigeration devices. The plurality of first refrigeration devices cool a cooling side medium of the second refrigeration device. This prevents failure, of cooling of the cooling side medium of the second refrigeration device, caused by a breakdown of a single first refrigeration device, and ensures reliability of the cooling of the cooling side medium of the second refrigeration device.

It should be understood that, based on the third alternative manner and the fourth alternative manner, when the cooling system includes a plurality of first refrigeration devices connected in parallel and a plurality of second refrigeration devices connected in parallel, in an implementation, a second refrigeration device module including the second refrigeration devices connected in parallel is connected in series to a first refrigeration device module including the first refrigeration devices connected in parallel. In other words, the first media output from the chilled side medium output ports of the second refrigeration devices may be transmitted to the second medium distribution path after passing through the second medium convergence path, and the second medium distribution path distributes the first media and transmits the distributed first media to the chilled side medium input ports of the first refrigeration devices. The second medium convergence path and the second medium distribution path may be medium paths on a same device, or may be medium paths on different devices. For example, the second medium convergence path may be a medium path in a second water collector device, and the second medium distribution path may be a medium path in a second water separator device. Alternatively, the second medium convergence path and the second medium distribution path may be medium paths in an integrated water collector/separator device, and the integrated water collector/separator device can converge the first media output from the cooling side medium output ports of the second refrigeration devices, and distribute the first media to the chilled side medium input ports of the first refrigeration devices.

Based on the third alternative manner and the fourth alternative manner, when the system includes a plurality of first refrigeration devices connected in parallel and includes a plurality of second refrigeration devices connected in parallel, in another implementation, each first refrigeration device may correspond to a second refrigeration device, and the chilled side medium input port of the first refrigeration device is connected to a cooling side medium output port of the corresponding second refrigeration device. For example, when the quantity of first refrigeration devices is equal to the quantity of second refrigeration devices, chilled side medium input ports of the first refrigeration devices are connected to cooling side medium output ports of the second refrigeration devices in a one-to-one correspondence. For another example, when the quantity of first refrigeration devices is greater than the quantity of second refrigeration devices, chilled side medium input ports of the plurality of first refrigeration devices may be connected to a cooling side medium output port of a same second refrigeration device through the second medium distribution path. For another example, when the quantity of first refrigeration devices is less than the quantity of second refrigeration devices, a chilled side medium input port of a same first refrigeration device may be connected to cooling side medium output ports of the plurality of second refrigeration devices through the second medium convergence path.

In the fifth alternative manner, the cooling system may further include a water mixing device. The water mixing device may be connected to an output port of the cold storage device for outputting the first medium during cold supply, an input port of the end device for receiving the first medium, and an output port of the end device for outputting the first medium. If a temperature of a first medium output by the cold storage device when the cold storage device supplies cold to the end device is lower than a temperature of a first medium output from the chilled side medium output port of the first refrigeration device when the first refrigeration device supplies cold to the end device, the water mixing device is configured to, when the cold storage device supplies cold to the end device, receive the first medium output by the cold storage device and the first medium output by the end device for mixing, and transmit the mixed first media to the end device. In an implementation, the water mixing device may be a three-way valve.

For example, the cold storage medium in the cold storage device is the first medium. It is assumed that a temperature (denoted as T1) of a first medium provided for the cold storage device when the second refrigeration device performs cold charging on the cold storage device is lower than a temperature (denoted as T2, namely, a temperature required by the end device, under normal operation, for a first medium that is provided for cold supply on the end device) of the first medium provided for the end device when the first refrigeration device supplies cold to the end device. Then, after the cold storage device receives the first medium, a temperature of the first medium stored in cold preservation is T1. In addition, during cold supply by the cold storage device on the end device, a temperature of the first medium output by the cold storage device is also T1. Because T1 is lower than T2, it is necessary to mix the first medium of a high temperature output by the end device and the first medium output by the cold storage device, and raise the temperature to make the mixture become a first medium of the T2 temperature, and the first medium is then transmitted to the end device for cold supply. The use of the water mixing device enables the cold storage capacity of the cold storage device to be adjusted more flexibly, and ensures cooling stability of the end device.

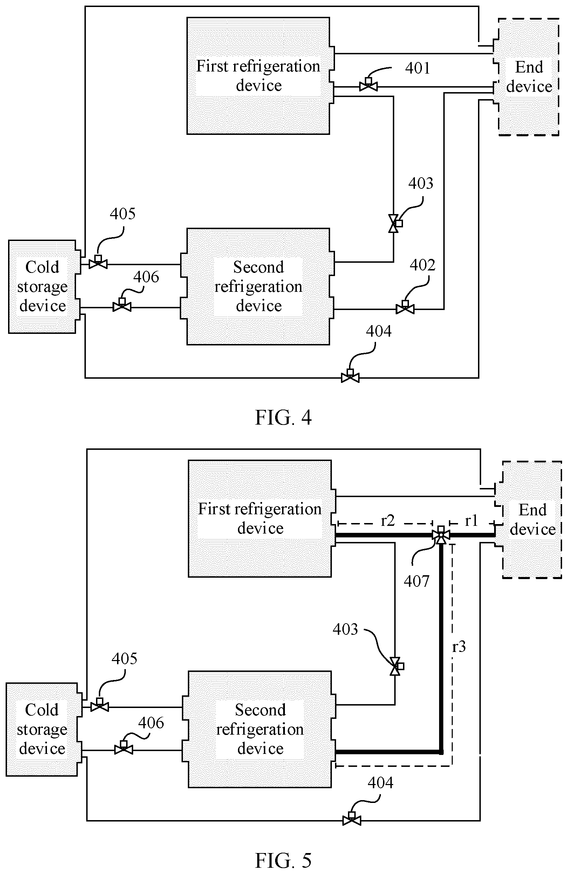

In the sixth alternative manner, at least one valve may be included on a pipeline between the first refrigeration device, the second refrigeration device, the cold storage device, or the end device, and the valve can be configured to control an open/closed state of the corresponding pipeline, or to control a transmission parameter (including traffic, temperature or pressure, or the like) of the first medium. The valves include but are not limited to a two-way valve, a three-way valve, and the like. FIG. 4 is a schematic diagram of an architecture of another cooling system according to an embodiment of this application. The following describes six example deployment manners of the valves in the cooling system with reference to FIG. 4. The valves may be deployed in any one or more of the following optional manners. It should be understood that FIG. 4 is used only to introduce the following various optional manners more conveniently, and does not mean that the following various optional manners need to be implemented in the same architecture corresponding to FIG. 4. As shown in FIG. 4, the following manners are described.

In the first optional manner, the chilled side medium input port of the first refrigeration device may be connected, through a first valve 401, to the output port of the end device for outputting the first medium. When the second refrigeration device performs cold charging on the cold storage device, or when the cold storage device supplies cold to the end device, the first valve 401 is in a closed state to prevent the first medium output by the end device from being transmitted to the chilled side medium input port of the first refrigeration device. When the first refrigeration device supplies cold to the end device and the second refrigeration device does not perform cold charging on the cold storage device, the first valve 401 is in an open state to input the first medium output by the end device into the chilled side medium input port of the first refrigeration device.

In the second optional manner, the cooling side medium input port of the second refrigeration device may be connected, through a second valve 402, to the output port of the end device for outputting the first medium. When the second refrigeration device performs cold charging on the cold storage device, the second valve 402 is in an open state to transmit the first medium output by the end device to the cooling side medium input port of the second refrigeration device. When the cold storage device supplies cold to the end device, or when the first refrigeration device supplies cold to the end device and the second refrigeration device does not supply cold to the cold storage device, the second valve 402 is in a closed state to prevent the first medium output by the end device from being transmitted to the cooling side medium input port of the second refrigeration device.

In the third optional manner, the chilled side medium input port of the first refrigeration device may be connected, through a third valve 403, to the cooling side medium output port of the second refrigeration device. When the second refrigeration device performs cold charging on the cold storage device, the third valve 403 is in an open state to transmit the first medium output from the cooling side medium output port of the second refrigeration device to the chilled side medium input port of the first refrigeration device. When the cold storage device supplies cold to the end device, or when the first refrigeration device supplies cold to the end device and the second refrigeration device does not supply cold to the cold storage device, the second valve 402 is in a closed state to prevent the first medium output from the cooling side medium output port of the second refrigeration device from being transmitted to the chilled side medium input port of the first refrigeration device.

In the fourth optional manner, the output port of the cold storage device for outputting the first medium when the cold storage device supplies cold to the end device may be connected, through a fourth valve 404, to the output port of the end device for outputting the first medium. When the cold storage device supplies cold to the end device, the fourth valve 404 is in an open state to transmit the first medium output by the end device to the cold storage device. When the first refrigeration device supplies cold to the end device, the fourth valve 404 is in a closed state to prevent the first medium output by the end device from being transmitted to the cold storage device.

In the fifth optional manner, the chilled side medium output port of the second refrigeration device may be connected, through a fifth valve 405, to an input port of the cold storage device to which the first medium is input during cold charging on the cold storage device, and the cooling side medium input port of the second refrigeration device may be connected, through a sixth valve 406, to an output port of the cold storage device for outputting the first medium during cold charging on the cold storage device. When the second refrigeration device performs cold charging on the cold storage device, the fifth valve 405 and the sixth valve 406 are both in an open state, where the fifth valve 405 is configured to transmit the first medium output from the cooling side medium output port of the second refrigeration device to the cold storage device, and the sixth valve 406 is configured to transmit the first medium output by the cold storage device to the cooling side medium input port of the second refrigeration device. When the second refrigeration device does not perform cold charging on the cold storage device, the fifth valve 405 and the sixth valve 406 are both in a closed state, where the fifth valve 405 is configured to prevent the first medium output from the cooling side medium output port of the second refrigeration device from being transmitted to the cold storage device, and the sixth valve 406 is configured to prevent the first medium output by the cold storage device from being transmitted to the cooling side medium input port of the second refrigeration device.

It should be understood that the foregoing five optional manners are all implementations using a two-way valve. Alternatively, the connection or deployment manners of the foregoing optional manners may be modified, by reusing a transmission port, a pipeline, a three-way valve, a water collector/separator device, or the like, to implement corresponding functions. It should be noted that other modified deployment manners shall also fall within the scope of protection of this application. The following provides two examples to illustrate modification of the connection or deployment manners, and the examples should not be construed as all modification manners limited in this application.

For example, the first valve 401 in the first optional manner and the second valve 402 in the second optional manner may be implemented by using a three-way valve in a pipeline reuse manner. The three-way valve includes one input port and two output ports. FIG. 5 is a schematic diagram of an architecture of another cooling system according to an embodiment of this application. As shown in FIG. 5, the output port of the end device for outputting the first medium may be connected to an input port of the three-way valve 407 through a reused pipeline r1, the cooling side medium input port of the first refrigeration device is connected to an output port of the three-way valve 407 through a first dedicated pipeline r2, and the cooling side medium input port of the second refrigeration device is connected to the other output port of the three-way valve 407 through a second dedicated pipeline r3. When the output port, of the three-way valve 407, connected to the chilled side medium input port of the first refrigeration device is closed, a function of the first valve 401 in a closed state in the first optional manner can be implemented. When the input port of the three-way valve 407 is open and the output port connected to the chilled side medium input port of the first refrigeration device is open, a function of the first valve 401 in an open state can be implemented. When the output port, of the three-way valve 407, connected to the cooling side medium input port of the second refrigeration device is closed, a function of the second valve 402 in a closed state in the second optional manner can be implemented. When the input port of the three-way valve 407 is open and the output port connected to the chilled side medium input port of the second refrigeration device is open, a function of the second valve 402 in an open state can be implemented. When the three-way valve 407 is closed, that is, both the input port and the two output ports are closed, functions of the first valve 401 and the second valve 402 that are in a closed state at the same time can be implemented.

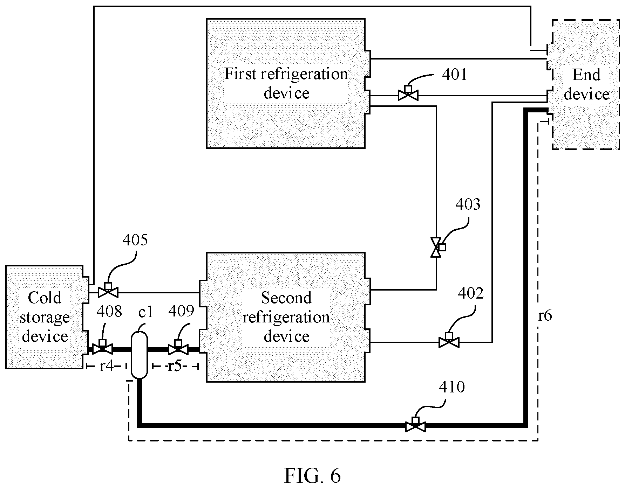

For another example, refer to FIG. 6. FIG. 6 is a schematic diagram of an architecture of another cooling system according to this application. As shown in FIG. 6, an output port for outputting the first medium when the cold storage device supplies cold to the end device and an input port through which the first medium is input when cold supply is performed on the cold storage device may be the same transmission port. The same transmission port is connected to a water collector/separator device c1 through a section of a reused pipeline r4; and the water collector/separator device c1 is connected to the chilled side medium input port of the second refrigeration device through a fourth dedicated pipe r5, and is connected, through a fifth dedicated pipeline r6, to the output port of the end device for outputting the first medium. The reused pipeline r4 may include a valve 408, the fourth dedicated pipeline r5 may include a valve 409, and the fifth dedicated pipeline r6 may include a valve 410. Through opening of the valve 408 and the valve 410, a function of the fourth valve 404 in an open state in the foregoing fourth optional manner can be implemented. Through closing of the valve 410, a function of the fourth valve 404 in a closed state can be implemented. Through opening of the valve 408 and the valve 409, a function of the sixth valve 406 in an open state in the foregoing fifth optional manner can be implemented. Through closing of the valve 409, a function of the sixth valve 406 in a closed state can be implemented. Through closing of the valve 408, the valve 409, and the valve 410, functions of the fourth valve 404 and the sixth valve 406 that are in a closed state at the same time can be implemented.

When the cooling system provided by the embodiment of this application supplies cold to the end device, the following three operation modes are included:

Mode 1: The first refrigeration device supplies cold to the end device, the second refrigeration device does not perform cold charging on the cold storage device, and the cold storage device does not perform cold supply or no cold charging is performed on the cold storage device.

Mode 2: The first refrigeration device supplies cold to the end device, and the second refrigeration device performs cold charging on the cold storage device.

Mode 3: The first refrigeration device does not supply cold to the end device, the second refrigeration device does not perform cold charging on the cold storage device, and the cold storage device supplies cold to the end device.

Mode 1 may refer to a situation in which the first refrigeration device is in a normal operating status, cold charging has been performed on the cold storage device, and the second refrigeration device is in a dormant or closed state. Mode 2 may refer to a situation in which the first refrigeration device is in a normal operating status, and the cold storage device consumes some cooling capacity after performing cold supply, and cold charging is being performed on the second refrigeration device. Mode 3 may refer to a situation in which the first refrigeration device cannot supply cold to the end device normally due to a power failure or other reasons, and the cold storage device supplies cold to the end device.

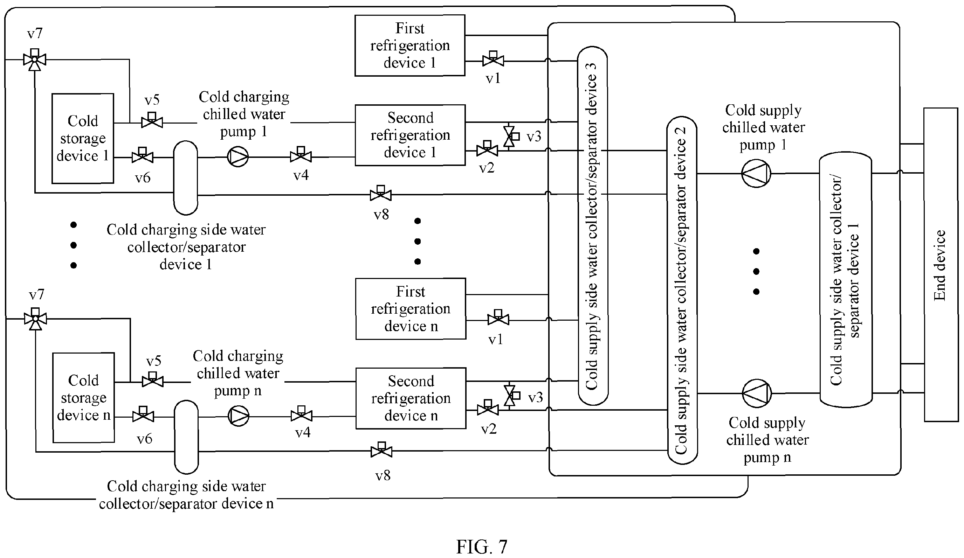

It should be understood that a system architecture of the embodiment of this application may be deployed based on various implementations including the foregoing various alternative or optional implementations, to implement the foregoing three modes. FIG. 7 is used as an example herein to further specifically describe control and deployment manners of implementing the foregoing three modes. In the cooling system of FIG. 7, with reference to the foregoing first alternative implementation and the second alternative implementation, n second refrigeration devices and n cold storage devices are deployed in the cooling system, and the second refrigeration devices are connected to the cold storage devices in a one-to-one correspondence. With reference to the third alternative implementation and the fourth alternative implementation, n first refrigeration devices are deployed in the cooling system, and the first refrigeration device module including the first refrigeration devices and the second refrigeration module including the second refrigeration devices are connected in series through the water collector/separator device. In the cooling system, the cold storage medium in the cold storage device is the first medium. In addition, to increase the cold storage capacity of the cold storage device, a temperature of the first medium provided by the second refrigeration device during cold charging for the cold storage medium is lower than a temperature of the first medium provided by the second refrigeration device during cold supply on the end device.

FIG. 7 is a schematic diagram of an architecture of still another cooling system according to an embodiment of this application. As shown in FIG. 7, a cold charging chilled water pump and a cold charging side water collector/separator device are disposed on a pipeline between a cooling side medium input port of each second refrigeration device and an output port of a cold storage device for outputting the first medium during cold charging. The cold charging chilled water pump is configured to drive the first medium to circulate between the second refrigeration device and the cold storage device when the second refrigeration device performs cold charging on the cold storage device. The cold charging side water collector/separator device is configured to: distribute a first medium output by the end device when the cold storage device supplies cold to the end device; or configured to transmit, to the cooling side medium input port of the second refrigeration device when the second refrigeration device performs cold charging on the cold storage device, a first medium output by the cold storage device.

An output port of the end device for outputting the first medium is connected to, through a reused cooling side water collector/separator device 1, a cold supply chilled water pump, and a cold supply side water collector/separator device 2, each of the cooling side input port of the second refrigeration device and the output port of the cold storage device for outputting the first medium when the cold storage device performs cold supply. The cold supply side water collector/separator device 1 is configured to converge the first media output from all output ports of the end device. When the cold supply chilled water pump is configured to drive the first medium to circulate between the end device and the cold storage device when the first refrigeration device supplies cold to the end device, or drive the first medium to circulate between the end device and the cold storage device when the cold storage device supplies cold to the end device. The cold supply side water collector/separator device 2 is configured to distribute the first medium output by the end device.

A cold supply side water collector/separator device 3 is disposed on a pipeline between the chilled side medium input port of the first refrigeration device and the cooling side medium output port of the second refrigeration device. The cold supply side water collector/separator device 3 is configured to: when each second refrigeration device performs cold charging on the cold storage device, converge first media output from the cooling side medium output ports; and distribute and transmit the first media to chilled side medium input ports of the first refrigeration devices.

In addition, the cooling system further includes eight valves v1 to v8 which are respectively deployed on corresponding pipelines in FIG. 7. Each valve implements the foregoing three operation modes of the cooling system through a combination of different states of the valve. A correspondence relationship between the combination of states and each operation mode is shown in Table 1:

**Table 1**

| Valve | v1 | v2 | v3 | v4 | v5 | v6 | v7 | v8 |
|---|---|---|---|---|---|---|---|---|
| Mode 1 | Open | Closed | Open | Closed | Closed | Closed | Closed | Closed |
| Mode 2 | Open | Open | Closed | Open | Open | Open | Closed | Closed |
| Mode 3 | Closed | Closed | Closed | Closed | Closed | Open | Adjustable | Open |

It should be noted that the valve v7 is a three-way valve with two input ports and one output port. One input port of the valve v7 is connected to the cold charging side water collector/separator device, the other input port of the valve v7 is connected to the output port, of the cold storage device, that outputs the first medium when the cold storage device performs cold supply, and the output port of the valve v7 is connected to the input port, of the end device, that inputs the first medium. In mode 3, the valve v7 can implement a function of a water mixing device, and can adjust a temperature of the first medium provided for the end device by adjusting traffic of the two input ports of the valve. In an implementation, the valve v7 may adjust the traffic of the two input ports under the control of a control device in the cooling system.

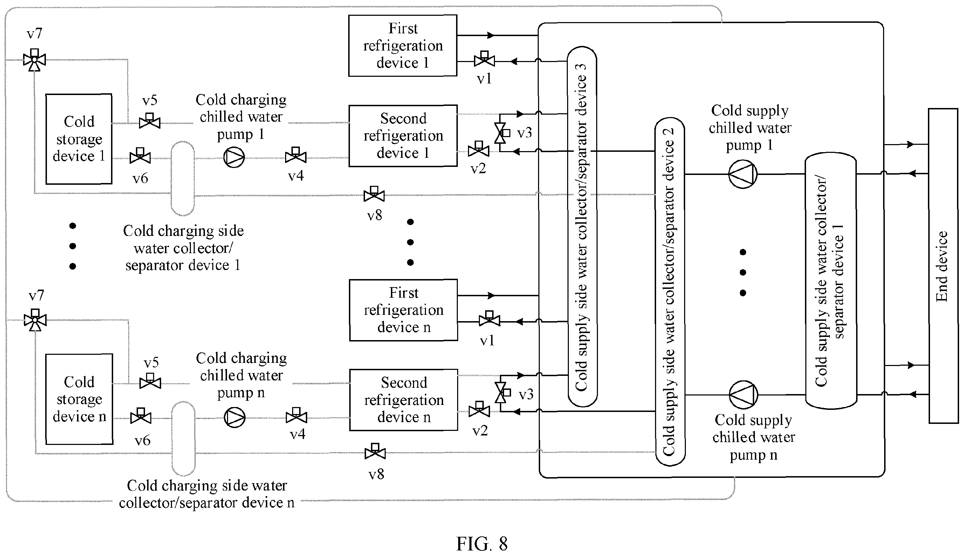

The following describes system operation of the cooling system shown in FIG. 7 in three operation modes with reference to FIG. 8 to FIG. 10. It should be noted that in FIG. 8 to FIG. 10, pipelines or water collector/separator devices represented by gray lines are in a non-operating status in the corresponding mode, that is, the first medium carried therein can be in a non-circulating state due to the control of a corresponding valve or the like; while pipelines or water collector/separator devices represented by black lines are in an operating status in the corresponding mode, that is, the first medium carried therein can circulate in a direction indicated by a marked arrow.

FIG. 8 is a schematic diagram of system operation of the cooling system shown in FIG. 7 in mode 1 according to an embodiment of this application. The chilled side medium output ports of the first refrigeration devices in FIG. 8 output first media of a lower temperature, and the first media of a lower temperature are transmitted to the input ports of the end device for inputting the first media, to supply cold to the end device. First media of a higher temperature output by the end device are converged in the cold supply side water collector/separator device 1, and then transmitted to the cold supply side water collector/separator device 2 and the cold supply side water collector/separator device 3 in turn based on driving of the cold supply chilled water pump, for further distribution and transmission of the first media to the chilled side medium input ports of the first refrigeration devices. The first refrigeration devices cool the first media to obtain first media of a lower temperature. According to this cycle, cold supply is implemented for the end device.

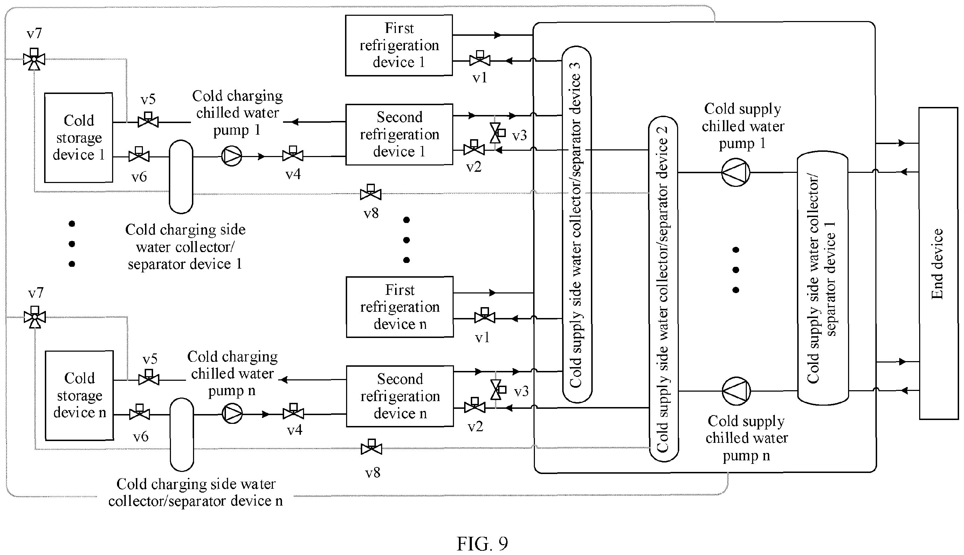

FIG. 9 is a schematic diagram of system operation of the cooling system shown in FIG. 7 in mode 2 according to an embodiment of this application. The chilled side medium output ports of the first refrigeration devices in FIG. 9 output first media of a lower temperature, and the first media of a lower temperature are transmitted to the input ports of the end device for inputting the first media, to supply cold to the end device. First media of a higher temperature output by the end device are converged in the cold supply side water collector/separator device 1, and then transmitted to the cold supply side water collector/separator device 2 based on driving of the cold supply chilled water pump. The cold supply side water collector/separator device 2 distributes and transmits the first media of a higher temperature to the cooling side medium input ports of the second refrigeration devices. The second refrigeration device uses the first media of a higher temperature as cooling water to cool the first media received from the cold storage device, and then the second refrigeration device outputs the first media of a lower temperature to the cold storage device through the chilled side medium output port, and outputs the first media of a further increased temperature through the cooling side medium output port. The first media of a further increased temperature are transmitted to the chilled side medium input ports of the first refrigeration devices through convergence and distribution of the cold supply side water collector/separator device. The first refrigeration devices cool the first media to obtain first media of a lower temperature. According to this cycle, the first refrigeration device implements cold supply for the end device.

The first medium of a lower temperature output by each of the second refrigeration devices is transmitted to the input port of the cold storage device for receiving the first medium during cold charging on the cold storage device, to implement cold charging for the end device. The first medium output by the cold storage device during cold charging on the cold storage device is transmitted to the chilled side medium input port of the second refrigeration device, so that the second refrigeration device cools the first medium input from the chilled side medium input port by using the first medium output from the end device, to obtain a first medium of a low temperature for transmission to the cold storage device. According to this cycle, the second refrigeration device implements cold charging on the cold storage device.

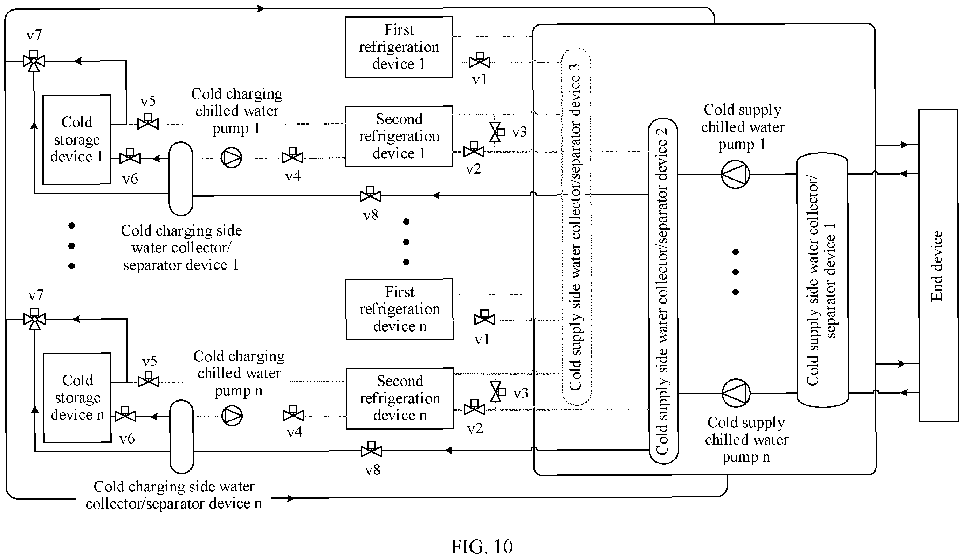

FIG. 10 is a schematic diagram of system operation of the cooling system shown in FIG. 7 in mode 3 according to an embodiment of this application. A temperature of the first medium stored in cold preservation in the cold storage device is lower than a temperature (namely, a temperature required by the end device for the first medium used for cold supply) of the first medium provided for the end device by the first refrigeration device when the first refrigeration device supplies cold to the end device. Therefore, in mode 3, after the first medium output by the cold storage device is mixed, through the valve v7, with the first medium output by the end device, a temperature of the mixed first media is matched with the temperature required by the end device for the first medium used for cold supply, and then the mixed first media is transmitted to the end device to implement cold supply for the end device. The end device outputs first media of a higher temperature, which are converged in the cold supply side water collector/separator device 1 and then transmitted to the cold supply side water collector/separator device 2 based on driving of the cold supply chilled water pump. The cold supply side water collector/separator device 2 distributes the first media of a higher temperature to the cold charging side water collector/separator devices, and the cold charging side water collector/separator devices distribute the first media output from the end device to the cold storage device or transmit the first media to the valve v7 for water mixing. According to this cycle, the cold storage device implements cold supply for the end device.

In this embodiment, the cooling system can implement uninterrupted cold supply for the end device in each of the three modes to ensure stable cold supply for the end device. In addition, in mode 2, the first refrigeration device and the second refrigeration device can independently supply cold (or cold charging) to the end device and the cold storage device, to implement flexible adjustment of the cold storage capacity of the cold storage device.

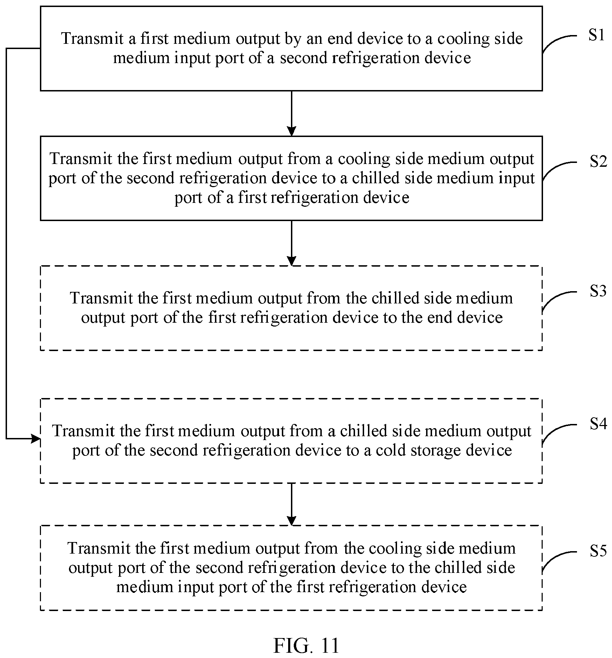

Based on the foregoing cooling system, an embodiment of this application further provides a cooling method of the cooling system. The method may be implemented based on any one of the foregoing cooling systems. In the method, a first refrigeration device and a cold storage device each are configured to provide a first medium for an end device, to supply cold to the end device. The second refrigeration device is configured to provide the first medium for the end device to perform cold charging on the cold storage device. FIG. 11 is a schematic flowchart of a cooling method of a cooling system according to an embodiment of this application. As shown in FIG. 11, the method at least includes steps S1 and S2.

S1: Transmit a first medium output by the end device to a cooling side medium input port of the second refrigeration device.

The second refrigeration device uses the first medium input from the cooling side medium input port as a cooling-side medium, and cools a first medium input from a chilled side medium input port of the second refrigeration device. After the cooling is completed, the first medium used as the cooling side medium is output from a cooling side medium output port.

S2: Transmit the first medium output from the cooling side medium output port of the second refrigeration device to a chilled side medium input port of the first refrigeration device.

The first refrigeration device uses the first medium input from the chilled side medium input port as a chilled-side medium, and cools the first medium. After the cooling is completed, the cooled first medium is output from a chilled side medium output port. Through step S2, the first refrigeration device can cool the cooling side medium of the second refrigeration device, to implement reuse of the device and reduce deployment costs.

Optionally, the method may further include step S3:
S3: Transmit the first medium output from the chilled side medium output port of the first refrigeration device to the end device.

Through steps S1 to S3, the first refrigeration device can supply cold to the end device, and the second refrigeration device can cool the first medium.

Optionally, the method may further include steps S4 and S5.

S4: Transmit the first medium output from the chilled side medium output port of the second refrigeration device to the cold storage device.

After cooling the first medium input from the chilled side medium input port, the second refrigeration device outputs the cooled first medium through the chilled side output port. It should be noted that a degree of the cooling of the first medium by the second refrigeration device is irrelevant to a degree of the cooling of the first medium by the first refrigeration device. In an implementation, a temperature of the first medium output from the chilled side medium output port of the second refrigeration device is lower than a temperature of the first medium output from the chilled side medium output port of the first refrigeration device.

S5: Transmit a first medium output by the cold storage device to the chilled side medium input port of the second refrigeration device.

The cold storage device may store a cooling capacity in the first medium provided by the second refrigeration device, and output the first medium from which the cooling capacity is released.

Through steps S4 and S5, the second refrigeration device can perform cold charging on the cold storage device. Steps S4 and S5 may be performed simultaneously with steps S2 and S3.

Alternatively, the cooling system includes a plurality of second refrigeration devices connected in parallel.

Further, the method further includes: transmitting first media output by the second refrigeration devices to the cold storage device through a first medium convergence path.

Further, the method may specifically include: transmitting the first media output from cooling side medium output ports of the plurality of second refrigeration devices to the chilled side medium input port of the first refrigeration device through a second medium convergence path.

Alternatively, the cooling system includes a plurality of cold storage devices connected in parallel, and the method further includes: transmitting the first media output by the second refrigeration devices to the plurality of cold storage devices through a first medium distribution path.

Alternatively, the cooling system includes a plurality of first refrigeration devices connected in parallel. Specifically, the first media output from the cooling side medium output ports of the second refrigeration devices may be transmitted to chilled side medium input ports of a plurality of first refrigeration devices through a second medium distribution path.

For the foregoing alternative or further implementations, refer to descriptions of the first to fourth alternative manners among the first refrigeration device, the second refrigeration device, the cold storage device, and the end device in the embodiments corresponding to FIG. 3 to FIG. 10. Details are not described herein again.

S1 to S5 describe a scenario, in the cooling method of the cooling system, in which the first refrigeration device supplies cold to the end device while the second refrigeration device performs cold charging on the cold storage device, that is, the cooling method used in the cooling system in an operating status of mode 2 in the three operation modes of the cooling system described in the corresponding embodiments of FIG. 3 to FIG. 10. For specific implementation, refer to the descriptions of mode 2 and the example descriptions of a system operating status of mode 2 in FIG. 9. Details are not described herein again. Through S1 to S5, cooling stability of the end device can be implemented, and a cold storage capacity of the cold storage device is more adjustable.

Optionally, in a scenario in which the first refrigeration device stops supplying cold to the end device and the cold storage device supplies cold to the end device, that is, in an operating status of mode 3 in the three operating modes of the cooling system described in the embodiments corresponding to FIG. 3 to FIG. 10, the cooling method of the cooling system may further include the following steps:
mixing the first medium output by the cold storage device and the first medium output by the end device, and transmitting the mixed first media to the end device.

The step is performed when a temperature of the first medium output by the cold storage device when the cold storage device supplies cold to the end device is lower than the temperature of the first medium output from the chilled side medium output port of the first refrigeration device when the first refrigeration device supplies cold to the end device. For specific implementation of the step, refer to the functional descriptions of the water mixing device in the fifth alternative manner in the descriptions of the cooling system, and the related descriptions of an operating mode of mode 3 of the cooling system in FIG. 8. Details are not described herein again. The execution of the step enables the cold storage capacity of the cold storage device to be adjusted more flexibly, and ensures cooling stability of the end device.

Optionally, in a scenario in which the first refrigeration device stops supplying cold to the end device and the second refrigeration device stops performing cold charging on the cold storage device, that is, in an operating status of mode 1 in the three operating modes of the cooling system described in the embodiments corresponding to FIG. 3 to FIG. 10, the cooling method of the cooling system may further include the following steps:
providing the first medium for the end device through the chilled side medium output port of the first refrigeration device to supply cold to the end device; and transmitting the first medium output by the end device to the chilled side medium input port of the first refrigeration device.

For specific implementation of the step, refer to the foregoing descriptions of mode 1 and the related descriptions of the operating mode of mode 1 of the cooling system in FIG. 8. Details are not described herein again.

In this embodiment, cold supply performed by the first refrigeration device on the end device and cold charging performed by the second refrigeration device on the cold storage device are independent of each other, so that the cold charging on the cold storage device does not affect the cold supply on the end device. This ensures cooling stability of the end device, and implements flexible adjustment of the cold storage capacity of the cold storage device. In addition, the first refrigeration device cools the chilled side medium of the second refrigeration device. This implements reuse of the cooling side of the second refrigeration device and the chilled side of the first refrigeration device, and reduces deployment costs of the cooling side of the second refrigeration device.

In the specification, claims, and accompanying drawings of this application, the terms "first", "second", "third", "fourth" and the like are intended to distinguish between different objects but do not indicate a particular order. In addition, terms "include", "have", and any other variant thereof are intended to cover non-exclusive inclusion. For example, a process, method, system or product including a series of steps or devices is not limited to the listed steps or devices, but optionally further includes unlisted steps or devices, or optionally further includes other steps or devices inherent in the process, method, or product.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cooling system, comprising a first refrigeration device, a second refrigeration device, and a cold storage device, wherein
the first refrigeration device and the cold storage device are configured to provide a first medium for an end device to supply cold to the end device, and the second refrigeration device is configured to provide a first medium for the cold storage device to perform cold charging on the cold storage device;
a cooling side medium input port of the second refrigeration device is configured to receive a first medium output by the end device; and
a chilled side medium input port of the first refrigeration device is connected to a cooling side medium output port of the second refrigeration device, and is configured to receive the first medium output from the cooling side medium output port of the second refrigeration device.

2. The cooling system according to claim 1, wherein a temperature of the first medium provided by the second refrigeration device for the cold storage device is lower than a temperature of the first medium provided by the first refrigeration device for the end device.

3. The cooling system according to claim 1 or 2, wherein the cooling system further comprises a water mixing device; and
the water mixing device is configured to: receive the first medium output by the cold storage device and the first medium output by the end device for mixing, and transmit the mixed first media to the end device.

4. The cooling system according to any one of claims 1 to 3, wherein the cooling system comprises a plurality of second refrigeration devices connected in parallel.

5. The cooling system according to claim 4, wherein that the second refrigeration device is configured to perform cold charging on the cold storage device comprises:
the plurality of second refrigeration devices are configured to perform cold charging on the cold storage device through a first medium convergence path.

6. The cooling system according to claim 4, wherein cooling side medium output ports of the plurality of second refrigeration devices are connected to the chilled side medium input port of the first refrigeration device through a second medium convergence path.

7. The cooling system according to any one of claims 1 to 6, wherein the cooling system comprises a plurality of cold storage devices connected in parallel, and that the second refrigeration device is configured to perform cold charging on the cold storage device comprises:
the second refrigeration devices are configured to perform cold charging on the plurality of cold storage devices through a first medium distribution path.

8. The cooling system according to any one of claims 1 to 7, wherein the cooling system comprises a plurality of first refrigeration devices connected in parallel, and the cooling side medium output ports of the second refrigeration devices are connected to chilled side medium input ports of the plurality of first refrigeration devices through a second medium distribution path.

9. The cooling system according to any one of claims 1 to 8, wherein a state of the cold storage medium in the cold storage device before the cold storage device supplies cold to the end device is the same as a state of the cold storage medium in the cold storage device after the cold storage device supplies cold to the end device.

10. The cooling system according to any one of claims 1 to 8, wherein a state of the cold storage medium in the cold storage device before the cold storage device supplies cold to the end device is different from a state of the cold storage medium in the cold storage device after the cold storage device supplies cold to the end device.

11. A cooling method of a cooling system, wherein the cooling system comprises a first refrigeration device, a second refrigeration device, and a cold storage device, both of the first refrigeration device and the cold storage device are configured to provide a first medium for an end device to supply cold to the end device, and the second refrigeration device is configured to provide a first medium for the cold storage device to perform cold charging on the cold storage device; and
the method comprises:
transmitting the first medium output by the end device to a cooling side medium input port of the second refrigeration device; and
transmitting the first medium output from a cooling side medium output port of the second refrigeration device to a chilled side medium input port of the first refrigeration device.

12. The method according to claim 11, wherein a temperature of the first medium provided by the second refrigeration device for the cold storage device is lower than a temperature of the first medium provided by the first refrigeration device for the end device.

13. The method according to claim 11 or 12, wherein a temperature of the first medium output by the cold storage device when the cold storage device supplies cold to the end device is lower than a temperature of the first medium output from a chilled side medium output port of the first refrigeration device when the first refrigeration device supplies cold to the end device, and the method further comprises:
when the cold storage device supplies cold to the end device, mixing the first medium output by the cold storage device and the first medium output by the end device, and transmitting the mixed first media to the end device.

14. The method according to any one of claims 11 to 13, wherein the cooling system comprises a plurality of second refrigeration devices connected in parallel.

15. The method according to claim 14, wherein the method further comprises:
transmitting first media output by the plurality of second refrigeration devices to the cold storage device through a first medium convergence path.

16. The method according to claim 14, wherein the transmitting the first medium output from the cooling side medium output port of the second refrigeration device to a chilled side medium input port of the first refrigeration device comprises:
transmitting first media output from cooling side medium output ports of the plurality of second refrigeration devices to the chilled side medium input port of the first refrigeration device through a second medium convergence path.

17. The method according to any one of claims 11 to 16, wherein the cooling system comprises a plurality of cold storage devices connected in parallel, and the method further comprises:
transmitting the first media output by the second refrigeration devices to the plurality of cold storage devices through a first medium distribution path.

18. The method according to any one of claims 11 to 17, wherein the cooling system comprises a plurality of first refrigeration devices connected in parallel, and
the transmitting the first medium output from a cooling side medium output port of the second refrigeration device to a chilled side medium input port of the first refrigeration device comprises:
transmitting, to chilled side medium input ports of a plurality of first refrigeration devices through a second medium distribution path, the first media output from the cooling side medium output ports of the second refrigeration devices.

19. The method according to any one of claims 11 to 18, wherein a state of the cold storage medium in the cold storage device before the cold storage device supplies cold to the end device is the same as a state of the cold storage medium in the cold storage device after the cold storage device supplies cold to the end device.

20. The method according to any one of claims 11 to 18, wherein a state of the cold storage medium in the cold storage device before the cold storage device supplies cold to the end device is different from a state of the cold storage medium in the cold storage device after the cold storage device supplies cold to the end device.
